# EUROPÄISCHE PATENTSCHRIFT

(11) **EP 0 637 542 B1**
(45) Veröffentlichungstag und Bekanntmachung des Hinweises auf die Patenterteilung: **07.05.1997**
(21) Anmeldenummer: 94890131.9
(22) Anmeldetag: 03.08.1994
(51) Int. Cl.: B64F 1/28, B64F 5/00

(54) **Fahrzeug zur Entsorgung der Toiletten von Passagierflugzeugen**
Vehicle to remove toilet waste for passenger aircraft
Véhicule de purge des toilettes d'un avion de passagers

(30) Priorität: 04.08.1993 AT 1550/93
(43) Veröffentlichungstag der Anmeldung: 08.02.1995
(73) Patentinhaber: Zellinger Gesellschaft m.b.H., A-4050 Traun (AT)
(72) Erfinder: Kock, Josef, Ing., A-4050 Traun (AT); Zellinger, Hans, Ing., A-4271 St. Oswald b. Freistadt (AT)
(74) Vertreter: Hübscher, Heiner, Dipl.-Ing.

(56) Entgegenhaltungen:
- AT-A- 380 839
- DE-U- 8 705 898
- DE-U- 9 111 803
- DE-U- 9 111 804
- US-A- 3 243 123
- US-A- 5 134 266

## Beschreibung

Die Erfindung bezieht sich auf ein Fahrzeug zur Entsorgung der Toiletten von Passagierflugzeugen mit wenigstens einem Aufnahmebehälter für Fäkalien und einem Rein- oder Spülwasserbehälter in Form eines flachen Aufbaues, mit einer am Fahrzeugheck vorgesehenen Arbeitskanzel, die über einen stehend angebrachten Kolbentrieb über ihre in Höhe des Aufbaues vorgesehene Ruhestellung anhebbar ist, mit einem am oberen Ende des Kolbentriebes oder an der Kanzel selbst und im Abstand vom Kolbentrieb am Fahrzeug um Querachsen angelenkten Stabilisator für die Arbeitskanzel und den Kolbentrieb und mit einem von der Kanzel aus manipulierbaren flexiblen Anschlußteil einer entlang des Stabilisators zu einem Aufnahmebehälter führenden Leitung.

Ein derartiges Fahrzeug ist aus der AT-PS 380 839 bekannt. Der grundsätzliche Vorteil besteht darin, daß eine niedrige Gesamtaufbauhöhe des Aufbaues und der eingefahrenen Arbeitskanzel ermöglicht wird, die das Einmanövrieren unter praktisch alle gängigen Flugzeugtypen zuläßt, wobei durch Höhenverstellung der Kanzel die verschieden hohen Fäkalienauslässe der verschiedenen Flugzeuge problemlos erreicht werden können. Bei der bekannten Ausführung ist eine Schwerkraftentleerung der Fäkalientanks der Flugzeuge über die vorzugsweise wenigstens zum Teil flexibel ausgebildete Fäkalienleitung vorgesehen. Die Fäkalienleitung kann aus einer parallel zum Kolbentrieb ein- und ausfahrbaren Teleskopleitung und einem flexiblen Anschlußende bestehen. Der Stabilisator ermöglicht es, einen Mehrstufenkolbentrieb von relativ einfachem, zylindrischen Aufbau zu verwenden, wobei die Aufgabe des Stabilisators darin besteht, ein Verdrehen der Kanzel um den dann mitdrehenden Kolbentrieb zu verhindern und bei Anordnung der Kanzel hinter dem Kolbentrieb das von der Kanzel auf diesen Kolbentrieb ausgeübte Kippmoment wenigstens zum Teil auszugleichen. Die Ausbildung der Fäkalienleitung als Teleskopleitung ist aufwendig und hat den Nachteil, daß vielfach auch die Außenseite dieser Leitung beschmutzt wird. Überdies ergeben sich Abdicht- und Unterbringungsprobleme. Der Stabilisator ist bei der bekannten Ausführung als in der Nähe des Fahrerhauses und am oberen Ende des Kolbentriebes oder an der Kanzel angelenktes Teleskoprohr ausgebildet, das entweder selbst als Luftfeder ausgebildet ist oder ein oder mehrere Federelemente enthält, die ebenso wie die Luftfeder dem Ausziehen einen entsprechenden Widerstand entgegensetzen und damit das Kippmoment der Kanzel auf den Kolbentrieb wenigstens zum Teil ausgleichen. Durch die Anlenkung des Teleskoprohres an Querachsen wirkt dieses Rohr auch einer Verdrehung der Kanzel um die Kolbenachse entgegen.

Aus der DE-OS 2 945 517 und der EP-PS 0 179 389 ist es an und für sich bekannt, bei anderen Entsorgungsfahrzeugen eine Luftpumpe einzusetzen, deren Saugseite mit einem Aufnahmebehälter für die Fäkalien verbunden wird, so daß es möglich ist, über die dann als Saugleitung dienende Fäkalienleitung den Inhalt des Fäkalientanks des Flugzeuges bei beliebiger Anbringungshöhe des Auslasses durch Saugwirkung zu entleeren.

Aus der DE-U-9 111 804 ist ein Frischwasser-Versorgungsfahrzeug für den Flugfeldbetrieb bekannt, dessen Stabilisator als teleskopische Wasserleitung ausgebildet ist.

Aufgabe der Erfindung ist es. bei einem Fahrzeug der eingangs genannten Art die Stabilisierung der Kanzel in den verschiedenen Ausfahrstellungen zu verbessern, die Manipulation und Führung der Fäkalienleitung zu vereinfachen und vorzugsweise auch die Gesamtfahreigenschaften des Fahrzeuges zu verbessern.

Die gestellte Hauptaufgabe wird dadurch gelöst, daß der Stabilisator aus zwei an ihren von der Kanzel abweisenden Enden über eine Querachse zu einer Halbschere verbundenen, aus der gefalteten Ruhestellung spreizbaren Lenkern besteht, die Fäkalienleitung entlang dieser Lenker geführt ist und der Aufnahmebehälter für die Fäkalien zumindest mit der Saugseite einer Luftpumpe verbindbar ist, wobei die Aufnahmeräume des Aufnahmebehälters für die Fäkalien und des Spül- oder Reinwasserbehälters je im wesentlichen symmetrisch zur Fahrzeugslängsachse ausgebildet sind.

Bei der erfindungsgemäßen Ausführung ist es nicht mehr notwendig, die Fäkalienleitung als Teleskopleitung auszubilden und es wird das Anschlußende der Fäkalienleitung zwangsweise mit der Kanzel verstellt. Die Ausführung des Stabilisators als Halbschere gewährleistet eine einwandfreie und sichere Zusatzführung für die Kanzel und deren sichere Stabilisierung gegen Verdrehung, wobei auch das Kippmoment der Kanzel in jeder Stellung wenigstens zum Teil ausgeglichen wird. Schließlich wird durch die an sich bekannte Verwendung einer Luftpumpe auch mit einem Fahrzeug der gegenständlichen Art die Absaugung der Fäkalien aus dem entsprechenden Tank des Flugzeuges möglich, so daß vor allem auch Flugzeuge mit sehr niedriger Höhe des Fäkalienauslasses über dem Boden bedient werden können. Durch die im wesentlichen symmetrische Ausbildung der Aufnahmeräume der Aufnahmebehälter ergibt sich der Zusatzeffekt, daß die Lastverteilung unabhängig vom Füllungsgrad der Behälter sowohl im Hinblick auf die Fahrzeugseiten als auch auf die Fahrzeugachsen proportional bleibt, so daß sich günstige Fahreigenschaften ergeben.

Es ist an sich möglich, die Fäkalienleitung als zumindest im Bereich der die Lenker verbindenden Querachsen flexible, gesonderte Leitung auszuführen, doch besteht eine bevorzugte Ausgestaltung der Erfindung darin, daß die beiden Lenker der Halbschere selbst aus die Fäkalienleitung bildenden Rohren bestehen, die über ein rohrförmiges biegesteifes Drehgelenk verbunden sind, das auch den Durchfluß der Fäkalien zuläßt. Hier ergibt sich eine besonders einfache Gesamtkonstruktion mit vergleichsweise geringem Eigengewicht.

Um die vorgesehene Symmetrie der Aufnahmeräume zu erzielen, kann in Weiterbildung der Erfindung der eine der beiden Aufnahmebehälter, vorzugsweise der Aufnahmebehälter für die Fäkalien, aus zwei untereinander über Querleitungen verbundenen, langgestreckten in ihrer Grundform annähernd zylindrischen Teilbehältern bestehen, die beidseits des anderen, als Flachtank ausgebildeten Aufnahmebehälters angeordnet sind. Diese Ausführung ergibt eine besonders günstige im wesentlichen proportional gleichbleibende Achslastverteilung auch bei verschiedensten Füllungsgraden der Aufnahmebehälter. Es ist ferner möglich, die Oberseite des Flachtanks um die Falthöhe der Halbschere tiefer als die Scheitel der Teilbehälter vorzusehen, so daß diese Halbschere in der Faltstellung zwischen den beiden Teilbehältern versenkt am Flachtank aufliegen kann.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht.

Es zeigen
- Fig. 1: schematisch in Seitenansicht den hinter dem Fahrerhaus liegenden Teil eines erfindungsgemäßen Fahrzeuges bei in eine Arbeitsstellung ausgefahrener Arbeitskanzel in Seitenansicht,
- Fig. 2: eine Draufsicht zu Fig. 1 bei eingefahrener Arbeitskanzel,
- Fig. 3: schematisch einen Querschnitt durch die Aufnahmebehälter und
- Fig. 4: einen Längsschnitt durch das Drehgelenk der Halbschere.

Am Längsträger 1 eines Fahrzeuges, von dem nur dieser Längsträger und die Räder 2 der Hinterachse dargestellt wurden, wobei an den Längsträger 1 vorne das Fahrerhaus mit der Vorderachse anschließen kann, sind ein beim Ausführungsbeispiel zur Aufnahme von Frischwasser dienender Flachtank 3 und zwei langgestreckt zylindrische Teilbehälter 4, 5 abgestützt, die miteinander einen Fäkalien-Aufnahmebehälter darstellen und am heckseitigen Ende über ein Rohr 6 verbunden sind. Im vorderen Endbereich ist eine nicht dargestellte Verbindung über ein im Querschnitt kleineres Rohr zum Druckausgleich vorgesehen. Der Behälter 4 besitzt oben einen Anschluß 7, an den über einen nicht dargestellten Filter mit Überfüllschutz die Saugseite einer Luftpumpe angeschlossen werden kann, wobei vorzugsweise über eine entsprechende Umschalteinrichtung auch die Möglichkeit vorhanden ist, über den Anschluß 7 Druckluft zum Entleeren der Behälter 4, 5 zuzuführen. Ein nicht dargestellter gemeinsamer Auslaß kann am Rohr 6 oder im Bereich des Hinterendes des Behälters 5 nach unten weisend vorgesehen werden.

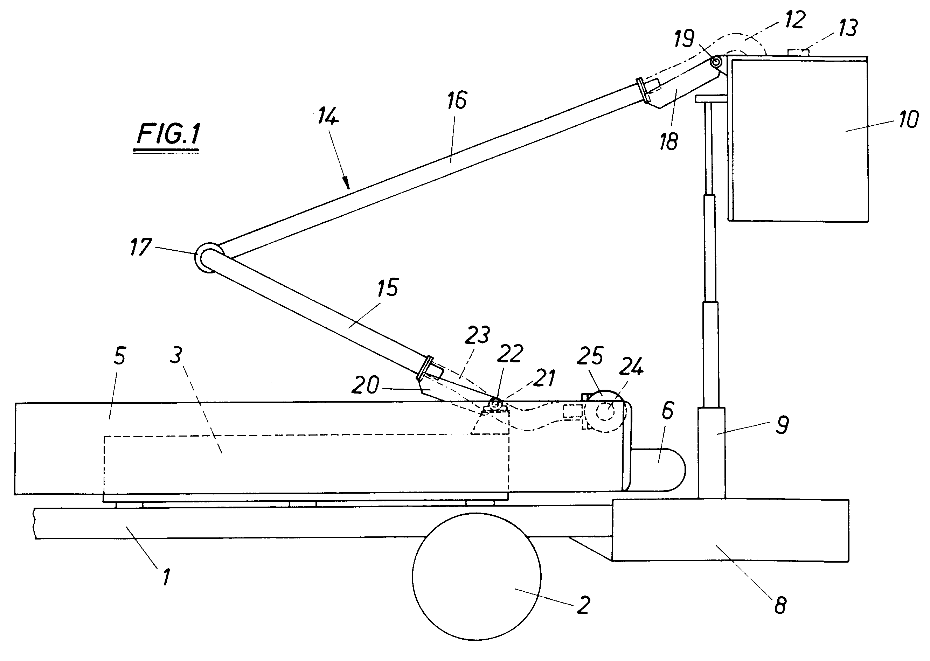

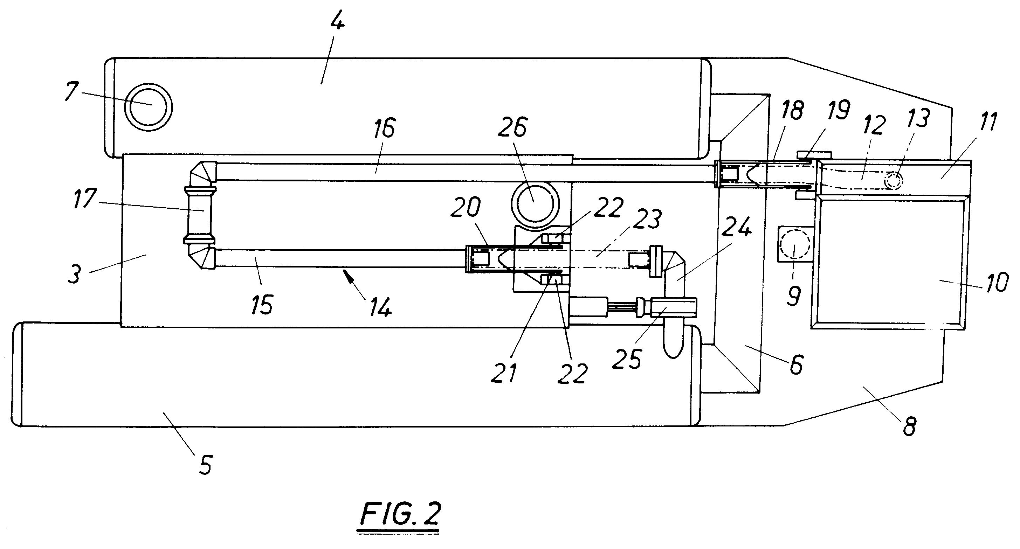

Am Träger 1 ist hinten eine Plattform 8 befestigt, auf der sich ein mehrstufiger Kolbentrieb 9 abstützt. Hinter dem Kolbentrieb 9 ist eine Arbeitskanzel 10 angebracht, die im oberen Endbereich mit dem Kolbentrieb 9 verbunden ist und die in einem Seitenfach 11 eine flexible Anschlußleitung 12 mit Schraub-oder Steckanschluß 13 für den Fäkalientank eines Flugzeuges aufnimmt. Diese Leitung 12 wurde in den Fig. 1 und 2 der besseren Übersichtlichkeit halber nur strichpunktiert dargestellt.

Zur Stabilisierung der Kanzel 10 in den verschiedenen Ausfahrstellungen dient ein Stabilisator 14, der im wesentlichen aus zwei Rohren 15, 16 besteht, die an dem von der Kanzel 10 abweisenden Ende über ein als Rotor ausgebildetes Drehgelenk 17 verbunden sind. Das freie Ende des Rohres 16 ist über einen Längsträger 18 und eine Querachse 19 am oberen Ende der Kanzel 10 angelenkt. An das untere Ende des Rohres 15 schließt ein Längsträger 20 an, der über eine Querachse 21 an mit Abstand von der Kanzel 10 an am Flachtank 3 angebrachten Lageraugen 22 schwenkbar ist. Vom unteren Ende des Rohres 15 führt wieder eine flexible Leitung 23 zu einem Querrohr 24 mit einem elektrisch oder pneumatisch betätigbaren Absperrschieber 25 und von diesem Absperrschieber von oben in das Hinterende des Teilbehälters 5. Der Frischwasserbehälter 3 besitzt einen Einlaß 26 und kann über eine eigene Pumpe und eine flexible Leitung mit einem in der Kanzel 10 vorgesehenen Anschluß verbunden werden. Die Rohre 15, 16 bilden zwei Lenker, die über das Drehgelenk 17 zu einer Halbschere verbunden werden, die in der Ruhestellung nach Fig. 2 zwischen den Behältern 4, 5 am Tank 3 aufruht.

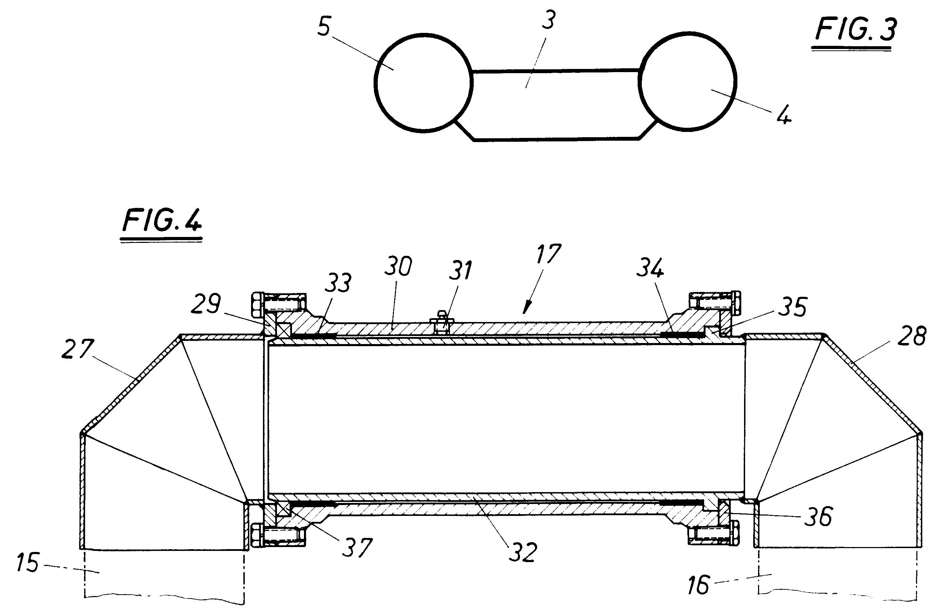

Das Drehgelenk 17 ist in Fig. 4 näher veranschaulicht. An die Rohre 15, 16 schließen Krümmer 27, 28 an. Der Krümmer 27 trägt einen Endflansch 29, an dem ein Außenrohr 30 befestigt ist, das über einen Nippel 31 mit einem Dichtungsmittel beschickt werden kann. Der Krümmer 28 ist mit einem Innenrohr 32 verbunden, das über gleitfähige Dichtungen 33, 34 im Außenrohr 30 drehbar gelagert ist, sich mit einem Endbund 35 in einer Enderweiterung des Außenrohres 30 führt und durch einen zweiteiligen Flansch 36 festgehalten wird. Im anderen Endbereich ist eine Dichtung 37 angebracht. Die beschriebene Konstruktion ergibt eine biege- und verwindungssteife Verbindung der beiden Rohre 15, 16.

In Abänderung der dargestellten Konstruktion ist es auch möglich, das Querrohr 24 durch ein dem Drehgelenk 17 entsprechendes Gelenk zu ersetzen, wobei dann das Rohr 15 bis zu diesem Drehgelenk reicht und um dieses Gelenk schwenkbar ist. Der Schieber 25 kann weiterhin in das Gelenk integriert bleiben.

## Patentansprüche

1. Fahrzeug zur Entsorgung der Toiletten von Passagierflugzeugen mit wenigstens einem Aufnahmebehälter (4, 5) für Fäkalien und einem Rein- oder Spülwasserbehälter (3) in Form eines flachen Aufbaues, mit einer am Fahrzeugende vorgesehenen Arbeitskanzel (10), die über einen stehend angebrachten Kolbentrieb (9) über ihre in Höhe des Aufbaues vorgesehene Ruhestellung anhebbar ist, mit einem am oberen Ende des Kolbentriebes (9) oder an der Kanzel (10) selbst und im Abstand vom Kolbentrieb (9) am Fahrzeug um Querachsen (19, 21) angelenkten Stabilisator (14) für die Arbeitskanzel (10) und den Kolbentrieb (9) und mit einem von der Kanzel (10) aus manipulierbaren flexiblen Anschlußteil (12) einer entlang des Stabilisators (14) zu einem Aufnahmebehälter (4, 5) führenden Leitung (12, 14, 15, 23), dadurch gekennzeichnet, daß der Stabilisator (14) aus zwei an ihren von der Kanzel abweisenden Enden über eine Querachse (17) zu einer Halbschere verbundenen, aus der gefalteten Ruhestellung spreizbaren Lenkem (15, 16) besteht, die Fäkalienleitung (12, 14, 15, 23) entlang dieser Lenker (15, 16) geführt und der Aufnahmebehälter (4, 5) für die Fäkalien zumindest mit der Saugseite einer Luftpumpe verbindbar ist, wobei die Aufnahmeräume des Aufnahmebehälters (4, 5) für die Fäkalien und des Spül- oder Reinwasserbehälters (3) je im wesentlichen symmetrisch zur Fahrzeugslängsachse ausgebildet sind.

2. Fahrzeug nach Anspruch 1, dadurch gekennzeichnet, daß die beiden Lenker der Halbschere (14) selbst aus die Fäkalienleitung bildenden Rohren (15, 16) bestehen und über ein rohrförmiges biegesteifes Drehgelenk (17) verbunden sind.

3. Fahrzeug nach Anspruch 1 oder 2, dadurch gekennzeichnet, daß der eine der beiden Aufnahmebehälter (3, 4, 5), insbesondere der Aufnahmebehälter (4, 5) für die Fäkalien, aus zwei untereinander über Querleitungen (6) verbundenen, langgestreckten, in ihrer Grundform annähernd zylindrischen Teilbehältern (4, 5) besteht, die beidseits des anderen, als Flachtank (3) ausgebildeten Aufnahmenbehälters angeordnet sind.

4. Fahrzeug nach einem der Ansprüche 1 bis 3, dadurch gekennzeichnet, daß die Oberseite des Flachtanks (3) um die Falthöhe der Halbschere (14) tiefer als die Scheitel der Teilbehälter (4, 5) vorgesehen ist.

## Claims

1. A vehicle for disposing of the contents of toilets of passenger aircraft, comprising at least one receiving container (4, 5) for feces and a clean or wash water container (3) in the form of a flat superstructure, with a working cubicle (10) provided at the end of the vehicle and raisable, via an upright piston drive (9), above its position of rest provided at superstructure level, comprising a stabiliser (14) for the cubicle (10) and the piston drive (9), said stabiliser (14) being articulated to the top end of the piston drive (9) or to the cubicle (10) itself and pivotable at a distance from the piston drive (9) on the vehicle about transverse axes (19, 21), and comprising a flexible connecting part (12) which can be manipulated from the cubicle (10) and which forms part of a line (12, 14, 15, 23) leading along the stabiliser (14) to a receiving container (4, 5), characterised in that the stabiliser (14) consists of two links (15, 16) which are connected via a transverse axis (17) to form a half-scissors at their ends remote from the cubicle, said links (15, 16) being adapted to open out of the closed position of rest, the feces line (12, 14, 15, 23) extends along said links (15, 16) and the receiving container (4, 5) for the feces is connectable at least to the intake side of an air pump, the receiving chambers of the receiving tank (4, 5) for the feces and the wash or clean water container (3) each being constructed to be substantially symmetrical with respect to the vehicle longitudinal axis.

2. A vehicle according to claim 1, characterised in that the two links of the half-scissors (14) themselves consist of tubes (15, 16) forming the feces line and are connected via a tubular flexurally stiff rotary joint (17).

3. A vehicle according to claim 1 or 2, characterised in that one of the two receiving containers (3, 4, 5), more particularly the receiving container (4, 5) for the feces, consists of two elongate component containers (4, 5) which are substantially cylindrical in their cross-section and which are interconnected via transverse lines (6) and which are disposed on either side of the other receiving container, which is constructed as a flat tank (3).

4. A vehicle according to any one of claims 1 to 3, characterised in that the top of the flat tank (3) is lower than the apex of the component containers (4, 5) by an amount corresponding to the closed height of the half-scissors (14).

## Revendications

1. Véhicule pour vidanger les toilettes d'avions transportant des passagers, comprenant au moins un réservoir (4, 5) destiné à recevoir les matières fécales et un réservoir (3) d'eau pure ou de rinçage sous la forme d'une structure plate, comprenant un habitacle de travail (10) qui est prévu à l'extrémité du véhicule et qui peut être levé au-dessus de sa position de repos prévue au niveau de la structure par l'intermédiaire d'un mécanisme à vérin (9) monté verticalement, comprenant un stabilisateur (14) de l'habitacle (10) et du mécanisme à vérin (9) qui est articulé autour d'axes transversaux (19, 21) sur le véhicule, à distance du mécanisme à vérin (9), et sur l'extrémité supérieure du mécanisme à vérin (9) ou sur l'habitacle de travail (10) lui-même, et comprenant une pièce de raccordement flexible (12) d'une conduite (12, 14, 15, 23) amenant le long du stabilisateur (14) à un réservoir (4, 5), laquelle peut être manipulée depuis l'habitacle (10), caractérisé par le fait que le stabilisateur (14) est constitué par deux bras articulés (15, 16) qui sont reliés entre eux à leurs extrémités opposées à l'habitacle par l'intermédiaire d'un axe transversal (17) pour former un demi-parallélogramme et qui peuvent être ouverts depuis la position de repos où ils sont repliés, que la conduite (12, 14, 15, 23) qui est destinée aux matières fécales passe le long de ces bras articulés (15, 16), et que le réservoir (4, 5) destiné à recevoir les matières fécales peut être relié au moins au côté de l'aspiration d'une pompe à air, cependant que les volumes intérieurs du réservoir (4, 5) destiné à recevoir les matières fécales et du réservoir (3) d'eau pure ou de rinçage sont chacun conformés en étant symétriques pour l'essentiel par rapport à l'axe longitudinal du véhicule.

2. Véhicule selon la revendication 1, caractérisé par le fait que les deux bras articulés du demi-parallélogramme (14) sont eux-mêmes formés par des tubes (15, 16) qui constituent la conduite destinée aux matières fécales, et qu'ils sont reliés entre eux par l'intermédiaire d'une articulation tournante tubulaire (17) qui résiste à la flexion.

3. Véhicule selon la revendication 1 ou 2, caractérisé par le fait que l'un des deux réservoirs (3, 4, 5), et en particulier le réservoir (4, 5) destiné à recevoir les matières fécales, est constitué par deux réservoirs partiels allongés (4, 5) qui sont reliés entre eux par l'intermédiaire de conduits transversaux (6), dont la forme de base est approximativement cylindrique et qui sont disposés des deux côtés de l'autre réservoir réalisé sous la forme d'un réservoir plat (3).

4. Véhicule selon l'une des revendications 1 à 3, caractérisé par le fait que le sommet des réservoirs partiels (4, 5) dépasse le coté supérieur du réservoir plat (3), et ce, de la hauteur qui est occupée par le demi-parallélogramme (14) lorsqu'il est replié.
